Europäisches Patentamt

European Patent Office

Office européen des brevets

(19)

(11) Veröffentlichungsnummer: **0 058 431**
**B1**

# (12) EUROPÄISCHE PATENTSCHRIFT

(45) Veröffentlichungstag der Patentschrift:
**11.05.88**

(21) Anmeldenummer: **82101139.2**

(22) Anmeldetag: **16.02.82**

(51) Int. Cl.⁴: **A 01 D 43/10,** A 01 F 29/20

(54) **Futtererntemaschine.**

(30) Priorität: **17.02.81 US 235314**

(43) Veröffentlichungstag der Anmeldung:
**25.08.82 Patentblatt 82/34**

(45) Bekanntmachung des Hinweises auf die Patenterteilung:
**11.05.88 Patentblatt 88/19**

(84) Benannte Vertragsstaaten:
**DE FR GB IT NL**

(56) Entgegenhaltungen:
**DE - A - 1 962 777**
**DE - A - 3 000 946**
**FR - A - 2 455 852**
**US - A - 3 357 164**
**US - A - 3 701 239**
**US - A - 3 916 605**

(73) Patentinhaber: **DEERE & COMPANY, 1 John Deere Road, Moline Illinois 61265 (US)**

(72) Erfinder: **deBuhr, Harold Eugene, 3 Carter Court Lane, Ottumwa Iowa 52501 (US)**
Erfinder: **Booker, Walter Woodrow, 305 S. Milner, Ottumwa Iowa 52501 (US)**
Erfinder: **Schmid, Steven Lawrence, R.R. 1, Agency Iowa 52530 (US)**

(74) Vertreter: **Fricke, Joachim, Dr. et al, Dr. R. Döring, Dr. J. Fricke, Patentanwälte Josephspitalstrasse 7, D-8000 München 2 (DE)**

**Beschreibung**

Die Erfindung betrifft eine Futtererntemaschine mit den Merkmalen des Oberbegriffs der Ansprüche 1 und 2.

Eine solche Futtererntemaschine ist aus der US-A-3 349 828 bekannt. Die bekannte Vorrichtung besteht aus einer Teilbaueinheit, die an der Rückseite einer Maiserntemaschine angebracht werden kann. Die Teilbaueinheit weist in einem Gehäuse Einfüllschächte für die Maiskolben auf, welche über Schnecken einer der Teilbaueinheit zugeordneten Messertrommel zugeführt werden. Im Einbauzustand der Teilbaueinheit erstreckt sich die Drehachse der Messertrommel parallel zur Fahrtrichtung der Futtererntemaschine. Unter der Messertrommel ist ein Fallschacht angeordnet, an dessen unterem Ende die zusammenwirkenden Druckrollen angeordnet sind, so dass die Drehachse der Messertrommel und die Mitte des Einlaufspaltes zwischen den Druckrollen in einer zum Erdboden lotrechten Ebene liegen. Unmittelbar unter dem Einlaufspalt der Druckrollen befindet sich ein Trog zur Aufnahme des zerkleinerten Gutes, das zu einer entsprechenden Schnecke abgefördert wird. Der gegenseitige Abstand der beiden Druckrollen lässt sich einstellen. Eine der beiden Druckrollen wird mit höherer Drehzahl als die andere angetrieben, so dass im Bereich des Einlaufspaltes eine Relativdrehung zwischen den Druckrollen stattfindet, wodurch die Scherwirkung im Spalt erhöht wird. Von der Messertrommel fällt das zerkleinerte Gut im freien Fall in den Einlaufspalt der Druckrolle.

Futtererntemaschinen können in verschiedener Weise ausgebildet sein. So kann die rotierend antreibbare Zerkleinerungseinrichtung mit ihrer Drehachse parallel zur Fahrtrichtung zur Futtererntemaschine oder quer dazu angeordnet sein. Das von der Zerkleinerungseinrichtung zerkleinerte Erntegut kann direkt in einen Austragschacht geworfen werden, durch den das Erntegut mit Hilfe des dabei entstehenden Luftzuges auf einen nachgezogenen Wagen geschleudert wird (vgl. US-A-3 357 164). Es kann aber auch zwischen der Zerkleinerungseinrichtung und der Abgabeeinrichtung, die zum Beispiel aus dem Förderschacht und einem Gebläse bestehen kann, noch eine Zwischenfördereinrichtung, z.B. in Form einer Förderschnecke, angeordnet sein (vgl. US-A-3 916 605 oder US-A-3 701 239).

Es ist ferner eine Futtererntemaschine bekannt, bei der zwischen der Zerkleinerungseinrichtung und der Abgabe- oder Austragvorrichtung zwei zusammenwirkende Quetschwalzen vorgesehen sind, deren Einlaufspalt mit Bezug auf eine durch die Längsachse der Zerkleinerungseinrichtung verlaufende vertikale Ebene rückwärtig versetzt ist. Dabei können die Quetschwalzen in ihrer Wirkung dadurch ausgeschaltet werden, dass zwischen der Zerkleinerungseinrichtung und der Abgabeeinrichtung ein Längsförderer vorgesehen ist, der das von der Zerkleinerungseinrichtung zerkleinerte Gut auch direkt zu der Abgabeeinrichtung fördern kann. Wahlweise wird mit Hilfe eines zusätzlichen, hinter der Zerkleinerungseinrichtung angeordneten Schrägförderers das zerkleinerte Erntegut nach rückwärts und nach oben dem Einlaufspalt zwischen den Quetschwalzen zugeleitet. Aus deren Spalt fällt das zerquetschte Gut auf den Zwischenförderer, der das Gut wieder der Abgabeeinrichtung zuleitet (vgl. DE-A-3 000 946).

Die an eine Futtererntemaschine anbaubare Teilbaueinheit nach der eingangs genannten US-A-3349 823 baut relativ raumbeanspruchend und hoch. Die Messertrommel treibt das zerkleinerte Gut durch ein Lochsieb, aus dem die zerkleinerten Erntegutteilchen im freien Fall in den Einlaufspalt der Quetschwalzen fällt. Diese Anordnung erfordert, dass das Erntegut zum Zubringen zu der Zerkleinerungseinrichtung relativ hoch gefördert werden muss, da die Messertrommel und das Lochsieb in erheblichem Abstand oberhalb der Quetschwalzen angeordnet sind. Insgesamt muss der Erntegutfluss mehrfach umgelenkt werden und erfordert zusätzliche und zwischengeschaltete Fördereinrichtungen mit relativ hohem Energieaufwand. Ähnliches gilt auch für die Futtererntemaschine nach der DE-A-3 000 946, wenn dort die Quetschwalzen oder Druckrollen in den Gutfluss eingeschaltet sind.

Demgegenüber ist es Aufgabe der Erfindung, eine Futtererntemaschine mit den Merkmalen des Oberbegriffs der Ansprüche 1 und 2 so weiterzubilden, dass bei geringem Bauaufwand und Raumbedarf ein möglichst direkter Gutdurchfluss durch die Erntemaschine bei relativ geringem Gesamtenergiebedarf erreicht wird.

Diese Aufgabe wird durch die kennzeichnenden Merkmale des Anspruchs 1 bzw. durch die kennzeichnenden Merkmale des Anspruchs 2 gelöst.

Durch die neue Ausbildung nach Anspruch 1 wird die Verwendung eines Lochsiebes im Zusammenhang mit der Zerkleinerungseinrichtung vermieden. Stattdessen wird die von der Zerkleinerungseinrichtung auf das zerkleinerte Erntegut übertragene Förderenergie unmittelbar ausgenutzt, um das zerkleinerte Erntegut direkt in den Einlaufspalt zwischen den Druckrollen zu fördern. Dadurch wird es möglich, die Druckrollen in beliebiger Raumlage gegenüber der Zerkleinerungseinrichtung anzuordnen, da in jedem Fall die relative Lage der Teile nach der Lehre des Anspruchs 1 so verwirklicht werden kann, dass der Einlaufspalt das von der Zerkleinerungseinrichtung weggeschleuderte zerkleinerte Gut unmittelbar aufnehmen kann.

Da die von der Zerkleinerungseinrichtung ausgehende Förderenergie unmittelbar zur zwangsweisen Zuförderung des zerkleinerten Erntegutes in den Eintrittsspalt zwischen den Druckrollen ausgenutzt wird, werden zusätzliche Förderorgane und zusätzliche Förderenergie eingespart. Da die Arbeitsweise unabhängig von der Wirkung der Schwerkraft auf das zerkleinerte Gut ist, kann die Futtererntemaschine auch sehr raumsparend und niedrig gebaut werden. Ausserdem ergibt sich ein direkterer und geraderer Durchfluss des Erntegutes durch die Futtererntemaschine, so dass weniger Störungen auftreten können. Auch ohne Lochsieb erhält man eine wirkungsvolle Zerkleinerung.

Es ist auch vorteilhaft, wenn man gemäss Anspruch 2 eine Teilbaueinheit vorsieht, die als selbständiger Teil nachträglich in eine Futtererntemaschine mit einer Zerkleinerungseinrichtung eingebaut werden kann. Hierbei umfasst die Teilbaueinheit lediglich die Druckrollen mit einer diesen nachgeschalteten Fördereinrichtung für das zerkleinerte Erntegut. Diese Teilbaueinheit lässt sich insbesondere bei solchen Futtererntemaschinen leicht nachträglich einbauen, bei denen ohnehin zwischen der Zerkleinerungseinrichtung und der Abgabeeinrichtung eine Fördereinrichtung vorgesehen ist. Diese kann leicht gegen die Teilbaueinheit ausgetauscht werden. Auch beim Einbau dieser Teilbaueinheit wird die Förderwirkung der Zerkleinerungseinrichtung auf das zerkleinerte Erntegut unmittelbar ausgenutzt, um dieses in den Einlaufspalt zwischen den Druckrollen zu schleudern, so dass Zwischenförderer und zusätzliche Antriebsenergie auch hier eingespart werden.

Auch hier wird ein besonders günstiger Gutfluss durch die Maschine erreicht. Die von den Druckrollen ausgehende Förderenergie kann unmittelbar dazu ausgenutzt werden, um das zerquetschte oder angebrochene Erntegut von den Druckrollen direkt in den Eintritt des Zwischenförderers zu schleudern.

Die relativen Umfangsgeschwindigkeiten der als Zerkleinerungseinrichtung vorteilhaft eingesetzten umlaufenden Messertrommel und der einzelnen Druckrollen kann vorteilhafterweise entsprechend den Ansprüchen 3 bis 6 ausgestaltet werden. Die Arbeitsweise der Druckrollen und das Zusammenwirken dieser Druckrollen mit der Messertrommel kann durch die Durchmesserwahl nach Anspruch 7 besonders günstig gestaltet werden.

Eine sehr raumsparende niedrige Bauweise ergibt sich, wenn die Druckrollen gegenüber der Zerkleinerungseinrichtung gemäss der Lehre der Ansprüche 8 und 9 angeordnet sind.

Um Störungen während des Betriebes weitgehend auszuschliessen ist es zweckmässig, wenn man die untere Druckrolle nachgiebig lagert.

Die Erfindung wird nachfolgend anhand schematischer Zeichnungen an einem Ausführungsbeispiel näher erläutert.

Es zeigen:

Fig. 1 eine Teilseitenansicht in vergrössertem Massstab einer Futtererntemaschine in bevorzugter Ausführungsform der Erfindung.

Fig. 2 eine Teildraufsicht auf die Erntemaschine, wobei Teile in gestrichelter Linie wiedergegeben sind.

Fig. 3 in grösserem Massstab die Zerkleinerungseinrichtung, die Walzenmühle und die Zuordnung der Fördereinrichtung.

Fig. 4 eine Stirnansicht der aus Druckrollen und Fördereinrichtung bestehenden Einheit und

Fig. 5 eine Seitenansicht der Einheit nach Fig. 4, bei der auch die Antriebsmittel gezeigt sind.

Die zur Erläuterung der Erfindung verwendete Ausführungsform einer Futtererntemaschine entspricht einer selbstfahrenden Erntemaschine, wie sie in der US-A-3 701 239 gezeigt ist. Die Erfindung ist selbstverständlich gleichermassen auf andere Futtererntemaschinen anwendbar, auch auf solche, die durch Ackerschlepper gezogen werden. In der selbstfahrenden Maschine ist ein sich von vorne nach hinten erstreckender Rahmen 10 vorgesehen, der durch vordere und rückwärtige Laufräder 12 und 14 unterstützt ist. Diese werden durch einen Antriebsmotor, z.B. eine Brennkraftmaschine 16, angetrieben. Im dargestellten Fall sind beide Achsen durch hydraulische Einrichtungen 18, 20 und 22 und ein Wechselgetriebe 24 für die Vorderräder angetrieben. Hierbei handelt es sich um Einrichtungen, die es in vielen verschiedenen Ausführungsformen gibt und die nicht Teil der vorliegenden Erfindung sind und daher nicht näher beschrieben werden. Bei einer vom Ackerschlepper gezogenen Erntemaschine umfasst die Kraftquelle ein Getriebe auf dem Rahmen der Erntemaschine, dem die Antriebskraft von der Zapfwelle des Ackerschleppers aus zugeführt wird. Auch diese Einrichtung bildet nicht Teil der vorliegenden Erfindung.

Der Rahmen 10 umfasst einen quer verlaufenden vorderen Tragteil 26. Der hierzu gehörende vordere Bereich trägt eine das Erntegut aufnehmende Einrichtung oder einen Kopf 28, der beliebiger Art und Gestaltung sein kann. Der Erntekopf nimmt das stehende Korn vom Feld in üblicher Weise auf. Das Erntegut wird z.B. durch Zuführungsrollen 30 z.B. in Form von Halmen mit Kolben, Blättern oder dergleichen nach rückwärts in Richtung auf eine mit hoher Geschwindigkeit rotierend angetriebene Zerkleinerungseinrichtung 32 gefördert. Diese zylindrische Zerkleinerungseinrichtung arbeitet typischerweise mit einem festen Messer 34 zusammen, um das Erntegut in relativ kleine Abschnitte zu zerkleinern, wie dies üblich ist. Die Zerkleinerungseinrichtung ist hier lediglich vereinfachend als Zylinder gezeigt, wobei die üblichen Messer zur Verdeutlichung weggelassen sind. Das zerkleinerte Gut wird kraftvoll nach unten und rückwärts geschleudert, wenn die Schneideinrichtung in Richtung des eingezeichneten Pfeiles rotiert.

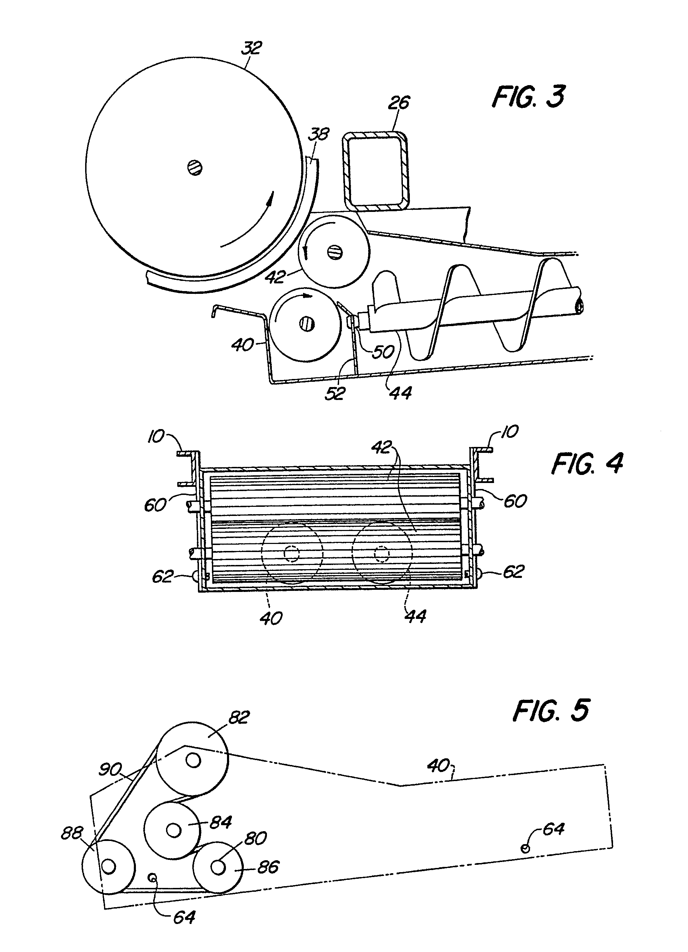

Bei einer üblichen Ausführungsform einer Erntemaschine wird das zerkleinerte Erntegut normalerweise durch einen nach rückwärts fördernden Förderer zu der Abgabeeinrichtung z.B. einem Gebläse 36 weiterbefördert, das im hinteren Teil der Maschine angeordnet ist. In einer durch einen Ackerschlepper gezogenen Maschine erstreckt sich der Förderer normalerweise quer zur Richtung der Fahrt und das Gebläse befindet sich an einer Seite der Maschine. Dies sind jedoch Einzelheiten, die im vorliegenden Zusammenhang keine besondere Bedeutung haben. Auch kann in einer typischen Futtererntemaschine zum erneuten Zerkleinern ein Sieb direkt hinter der Zerkleinerungseinrichtung in einem tiefer liegenden Teil angebracht werden. Hierbei handelt es sich normalerweise um den Quadranten zwischen der 3-Uhr-Position und der 6-Uhr-Position. Ein solches Sieb kann auch bei der Futtererntemaschine gemäss der Erfindung verwendet werden. So zeigt Fig. 3 gekrümmte Gleitführungen zur Aufnahme eines solchen Siebes bei 38. Es wird nachfolgend ersichtlich, dass die gemäss der Erfindung kombinierten Elemente auch leicht entfernt und durch übliche Mittel ersetzt werden können, worauf ein solches zur weiteren Zerkleinerung dienendes Sieb an Ort und Stelle gebracht wird, wenn dies gewünscht ist.

Eine Teilbaueinheit 40 von kastenförmiger Gestalt wird durch den Rahmen der Futtererntemaschine unterstützt und erstreckt sich von einer Stelle unmittelbar hinter und unter der Schneideinrichtung bis zu einem Bereich in der Nachbarschaft des Abgabegebläses 36. Diese Teilbaueinheit und deren Komponenten ersetzen dabei die übliche Fördereinrichtung, die sich zwischen der Schneideinrichtung und dem Gebläse erstreckt. Zu der Teilbaueinheit gehören obere und untere Druckrollen 42, die im entgegengesetzten Sinne gemäss den Pfeilen um quer verlaufende und zueinander parallele Achse antreibbar sind, die auch parallel zur Drehachse der Schneideinrichtung angeordnet sind. Diese Druckrollen sind auf ihrer Aussenfläche gewellt oder gerippt oder geriffelt, wie dies bei Walzenmühlen üblich ist. Sie laufen in unmittelbarer Nähe zueinander, so dass das Erntegut, das von der Schneideinrichtung kommt, weiter zerkleinert wird. Die Druckrollen sind dabei besonders geeignet, Kerne oder dergleichen zu zerkleinern. Die Rollen sind so angeordnet, dass die obere Rolle hinter und in einem Bereich unterhalb der Drehachse der Zerkleinerungseinrichtung liegt, während die untere Rolle nach vorne und im wesentlichen nach unten gegenüber der oberen Rolle versetzt ist. Die Lage ist so gewählt, dass die Druckrollen besonders günstig das Erntegut von der Zerkleinerungseinrichtung aufnehmen, ohne dass weitere Fördereinrichtungen notwendig sind. Die Zerkleinerungseinrichtung wirft das Erntegut tangential in einer nach unten und nach rückwärts gerichteten Richtung direkt in den Einlaufspalt zwischen den Druckrollen.

Die Druckrollen 42 wiederum werfen das weiter zerkleinerte Gut hauptsächlich nach rückwärts, aber ebenfalls nach unten und zwar in den Eingangsteil der von vorne nach hinten fördernden Fördereinrichtung. Diese sind im dargestellten Beispiel durch zwei Förderschnecken 44 (Fig. 4) gebildet. Diese bewegen das zerkleinerte Gut nach rückwärts zum Gebläse 36. Die Wellen der Förderer haben eine Reihe von Paddeln 46, um das Erntegut nach der Seite in die Aufnahmeöffnung 48 des seitlichen Gebläsegehäuses zu werfen.

Die Lage der Rollen in der zuvor beschriebenen Weise, in der die untere Rolle gegenüber der oberen Rolle nach vorne und nach unten versetzt ist, ermöglicht es, dass der vordere Teil der Fördereinrichtung möglichst nahe den Rollen zu liegen kommt, und zwar in einem Bereich, wo die vorderen Enden der Förderelemente bei 50 in einer Querwand 52 der Teilbaueinheit gelagert sind. Die Förderer oder Schnecken sind kürzer als die ersetzten Fördereinrichtungen der üblichen Futtererntemaschine um einen Betrag, der notwendig ist, um die Druckrollen aufzunehmen. Dies erleichtert das Auswechseln der Teilbaueinheit gegen einen üblichen Förderer.

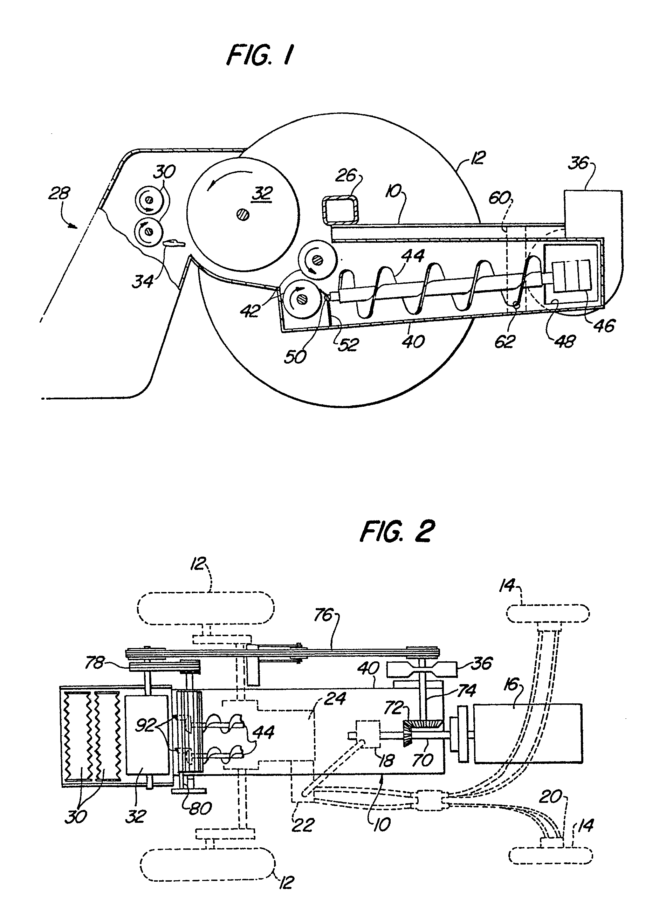

Das Montieren der kastenförmigen Teilbaueinheit 40 kann am besten aus den Fig. 1 und 4 erkannt werden. Jedes Glied des Rahmens 10 weist vordere und rückwärtige nach unten ragende Tragglieder auf. Diese erstrecken sich an der Längsseite beiderseits der Teilbaueinheit. Jedes Tragglied ist an der zugehörigen Seitenwand der Teilbaueinheit mit Hilfe von lösbaren Stiften 62 befestigt. Die zugehörigen Öffnungen in der Wand sind bei 64 in Fig. 5 zu sehen.

In einer bevorzugten Ausführungsform sind die Durchmesser der Rollen 42 so gewählt, dass sie etwa 1/3 des Durchmessers der zylinderförmigen Schneideinrichtung aufweisen. Im dargestellten Beispiel beträgt der Durchmesser der Rollen 20 cm und der der Zerkleinerungseinrichtung 60 cm. Die Drehgeschwindigkeit der unteren Rolle 42 ist grösser als die der oberen Rolle, um eine Anhäufung des behandelten Erntegutes insbesondere von Kernen zu vermeiden. Weiterhin wurden gute Ergebnisse erhalten, wenn die Oberflächengeschwindigkeit der unteren Rolle annähernd gleich der tangentialen Geschwindigkeit der Zerkleinerungseinrichtung ist. Im dargestellten Beispiel beträgt die Rotationsgeschwindigkeit der Zerkleinerungseinrichtung etwa 850 U/min., während die langsame Rolle mit 2250 und die schnellere Rolle mit 2750 U/min. angetrieben werden. Als Beispiel dienende Antriebsmittel zur Erzielung der gezeigten Drehzahlen wird auf die Figuren 2 und 5 verwiesen. Wie aus Fig. 2 hervorgeht, weist die Antriebsmaschine 16 eine Antriebswelle 70 auf, die mit Hilfe eines Kegelrades 72 eine Querwelle 74 antreibt, auf der die Flügel des Gebläses 36 montiert sind. Ein Antriebsriemen 76 verbindet diese Welle mit der Welle der Zerkleinerungseinrichtung. Ein Flachriemen oder ein Mehrfach-V-Riemen 78 treibt die obere Druckrolle 42 an. An der entgegengesetzten Seite der Maschine ist ein Differentialantrieb vorgesehen, der die untere Rolle antreibt sowie eine Querwelle 80 für die Förderschnecken. Dieser Antrieb umfasst eine Riemenscheibe 82 auf der Welle der oberen Rolle, eine Riemenscheibe 84 auf der Welle für die untere Druckrolle, eine Riemenscheibe 86 auf der Querwelle 80, eine leer umlaufende Riemenscheibe 88 sowie einen mehrfachen V-Riemen 90 auf, der um die Riemenscheibe in einer solchen Weise gelegt ist, dass die unteren und oberen Druckrollen in entgegengesetzten Richtungen rotieren. Ein Kegeltrieb 92 vervollständigt den Antrieb für die Schnecken 44. Die Aufsammeleinrichtung und die Zuführungsrollen 30 können in irgend einer passenden Weise angetrieben werden. Einzelheiten hierüber sind weggelassen, da sie nicht Teil der Erfindung sind.

Die untere Druckrolle kann Mittel haben, um ihre Stellung gegenüber der oberen Rolle einstellen zu können. Sie umfasst vorzugsweise nachgiebige Mittel, so dass die Druckrollen sich auseinander bewegen können, wenn Fremdkörper vorliegen, wie dies aus Walzenmühlen bekannt ist. Die Vorteile dieser Mühlen als solche sind ebenfalls bekannt und brauchen hier nicht detailliert auseinandergesetzt zu werden. Ein Vorteil jedoch besteht darin, dass die Walzenmühle in ihrer Anordnung in einer Futtererntemaschine den Nachteil der Notwendigkeit vermeidet, zur zusätzlichen Zerkleinerung dienende Siebe oder dergleichen zu verwenden. Die Walzen sind auch wirkungsvoller als solche Siebe, wobei die Siebe das ganze Material zu kleinen Partikelchen zerkleinern. Ein anderer Vorteil besteht darin, dass die Druckrollen weniger Abrieb erzeugen, was zu Verdauungsproblemen führt und die Verwendung des Futters einschränkt. Grobe Partikelchen werden auf essbare Grösse vermindert und die Silage als Ganzes ist gleichförmiger bezüglich der Teilchenlänge, so dass eine bessere Packung in einem Silo oder dergleichen erreicht wird. Die Druckrollen sind besonders vorteilhaft bei Verminderung später geernteter Maisfutterteile, bei denen die härteren Kerne bei früheren Systemen der Zerkleinerung entgehen. Dabei sorgen die Druckrollen für eine Konsistenz des Futters, das auch von älteren Kühen mit abgenutzten Zähnen besser angenommen wird.

**Patentansprüche**

1. Futtererntemaschine mit einer um eine Achse rotierend antreibbaren Zerkleinerungseinrichtung (32, 34) und mit zwei der Zerkleinerungseinrichtung nachgeordneten, zusammenwirkenden Druckrollen (42), die um zueinander und zu der Drehachse der Zerkleinerungseinrichtung parallele Drehachsen rotierend antreibbar sind und zwischen sich einen Einlaufspalt bilden, wobei das von der Zerkleinerungseinrichtung zerkleinerte Erntegut durch den Einlaufspalt der Druckrollen hindurch und einer Abgabeeinrichtung zugefördert wird, dadurch gekennzeichnet, dass die Druckrollen (42) derart in Durchflussrichtung des Erntegutes hinter der Zerkleinerungseinrichtung (32, 34) angeordnet sind, dass sich der Einlaufspalt in der Flugbahn des tangential von der Zerkleinerungseinrichtung weggeschleuderten zerkleinerten Gutes befindet.

2. Teilbaueinheit für eine Futtererntemaschine mit einer um eine Achse rotierend antreibbaren Zerkleinerungseinrichtung (32, 34) und mit zwei der Zerkleinerungseinrichtung nachgeordneten, zusammenwirkenden Druckrollen (42), die um zueinander und der Drehachse der Zerkleinerungseinrichtung parallele Drehachsen rotierend antreibbar sind und zwischen sich einen Einlaufspalt bilden, wobei das von der Zerkleinerungseinrichtung zerkleinerte Erntegut durch den Einlaufspalt der Druckrollen hindurch und einer Abgabeeinrichtung zugefördert wird, dadurch gekennzeichnet, dass die Druckrollen (42) mit einer dieser nachgeschalteten Fördereinrichtung (44) für das zerkleinerte Erntegut in der leicht lösbar in die Futtermaschine einbaubaren Teilbaueinheit zusammengefasst sind, die so ausgebildet und einbaubar ist, dass die Druckrollen (42) in Durchflussrichtung des Erntegutes hinter der Zerkleinerungseinrichtung (32, 34) mit ihrem Einlaufspalt in der Flugbahn des tangetial von der Zerkleinerungseinrichtung weggeschleuderten zerkleinerten Gutes liegen.

3. Futtererntemaschine nach Anspruch 1 oder 2, dadurch gekennzeichnet, dass die Zerkleinerungseinrichtung (32, 34) eine umlaufende Messertrommel (32) umfasst und die Umfangsgeschwindigkeit einer Druckrolle (42) der Umfangsgeschwindigkeit der Messertrommel (32) etwa entspricht.

4. Futtererntemaschine nach Anspruch 3, dadurch gekennzeichnet, dass eine der Druckrollen (42) von der Messertrommel (32) aus antreibbar ist.

5. Futtererntemaschine nach Anspruch 3 oder 4, dadurch gekennzeichnet, dass die Antriebsverbindung der beiden Druckrollen (42) so ausgebildet ist, dass eine der beiden Druckrollen (42) schneller als die andere antreibbar ist und die Umfangsgeschwindigkeit der langsamer angetriebenen Druckrolle (42) der Umfangsgeschwindigkeit der Messertrommel (32) etwa entspricht.

6. Futtererntemaschine nach Anspruch 5, dadurch gekennzeichnet, dass die untere Druckrolle (42) die schneller angetriebene Druckrolle ist.

7. Futtererntemaschine nach einem oder mehreren der voranstehenden Ansprüche, dadurch gekennzeichnet, dass der Durchmesser der Druckrollen (42) etwa ein Drittel des Durchmessers der Messertrommel (32) beträgt.

8. Futtererntemaschine nach Anspruch 1 oder 2, dadurch gekennzeichnet, dass die obere Druckrolle (42) in Durchflussrichtung des Erntegutes gegenüber der unteren Druckrolle (42) stromabwärts versetzt angeordnet ist.

9. Futtererntemaschine nach Anspruch 1 oder 2, dadurch gekennzeichnet, dass die Druckrollen (42) unterhalb der die Achse der Zerkleinerungseinrichtung (32, 34) enthaltenden horizontalen Ebene angeordnet sind, und die Drehachse der tiefer liegenden Druckrolle (42) unterhalb des Umfanges der Zerkleinerungseinrichtung (32, 34) vorgesehen ist.

10. Futtererntemaschine nach einem oder mehreren der voranstehenden Ansprüche, dadurch gekennzeichnet, dass hinter den Druckrollen (42) eine das Erntegut der Abgabeeinrichtung zufördernde Fördereinrichtung, z. B. ein Schneckenförderer (44), so angeordnet ist, dass sich der Eingangsteil der Fördereinrichtung in der Wurfbahn von den Druckrollen (42) weggeschleuderten Erntegutes befindet.

11. Futtererntemaschine nach Anspruch 10, dadurch gekennzeichnet, dass die Fördereinrichtung (44) mit ihrem stromaufwärts liegenden Ende unter die obere Druckrolle (42) vorspringt und bis in unmittelbare Nähe der unteren Druckrolle (42) geführt ist.

12. Futtererntemaschine nach einem oder mehreren der voranstehenden Ansprüche, dadurch gekennzeichnet, dass die untere Druckrolle (42) nachgiebig gelagert ist.

## Claims

1. A forage harvesting machine comprising a crushing means (32, 34) drivable in rotation about an axis and two co-operating pressure rollers (42) which are arranged downstream of the crushing means and which are drivable in rotation about axes of rotation which are parallel to each other and to the axis of rotation of the crushing means and which form an intake gap between them, wherein the crop material which is crushed by the crushing means is conveyed through the intake gap of the pressure rollers and passed to a discharge means, characterised in that the pressure rollers (42) are arranged downstream of the crushing means (32, 34) in the direction of flow of the crop material through the machine, in such a way that the intake gap is on the trajectory of the crushed material which is flung tangentially away by the crushing means.

2. A sub-unit for a forage harvesting machine comprising a crushing means (32, 34) drivable in rotation about an axis and two co-operating pressure rollers (42) which are arranged downstream of the crushing means and which are drivable in rotation about axes of rotation which are parallel to each other and to the axis of rotation of the crushing means and which form an intake gap between them, wherein the crop material which is crushed by the crushing means is conveyed through the intake gap of the pressure rollers and passed to a discharge means, characterised in that the pressure rollers (42) are combined together with a conveyor means (44) disposed downstream thereof for the crushed crop material, in the sub-unit which can be easily releasably installed in the forage harvesting machine and which is of such a configuration and which can be so installed that the pressure rollers (42), in the direction of flow of the crop material, are disposed downstream of the crushing means (32, 34), with their intake gap on the trajectory of the crushed material which is flung tangentially away by the crushing means.

3. A forage harvesting machine according to claim 1 or claim 2, characterised in that the crushing means (32, 34) includes a rotating blade drum (32) and the peripheral speed of a pressure roller (42) substantially corresponds to the peripheral speed of the blade drum (32).

4. A forage harvesting machine according to claim 3, characterised in that one of the pressure rollers (42) is drivable from the blade drum (32).

5. A forage harvesting machine according to claim 3 or claim 4, characterised in that the drive connection of the two pressure rollers (42) is of such a configuration that one of the two pressure rollers (42) is drivable faster than the other and the peripheral speed of the more slowly driven pressure roller (42) substantially corresponds to the peripheral speed of the blade drum (32).

6. A forage harvesting machine according to claim 5, characterised in that the lower pressure roller (42) is the faster driven pressure roller.

7. A forage harvesting machine according to one or more of the preceding claims, characterised in that the diameter of the pressure rollers (42) is approximately one third of the diameter of the blade drum (32).

8. A forage harvesting machine according to claim 1 or 2, characterised in that the upper pressure roller (42) is arranged displaced downstream relative to the lower pressure roller (42) in the direction of flow of the crop material through the machine.

9. A forage harvesting machine according to claim 1 or claim 2, characterised in that the pressure rollers (42) are arranged beneath the horizontal plane containing the axis of the crushing means (32, 34) and the axis of rotation of the lower pressure roller (42) is beneath the periphery of the crushing means (32, 34).

10. A forage harvesting machine according to one or more of the preceding claims, characterised in that a conveyor means, for example a screw conveyor (44), for conveying the crop material to the discharge means, is arranged downstream of the pressure rollers (42) so that the entry portion of the conveyor means is disposed on the trajectory of the crop material which is flung away by the pressure rollers (42).

11. A forage harvesting machine according to claim 10, characterised in that the conveyor means (44) projects with its upstream end to beneath the upper pressure roller (42) and is extended into the direct vicinity of the lower pressure roller (42).

12. A forage harvesting machine according to one or more of the preceding claims, characterised in that the lower pressure roller (42) is mounted yieldingly.

## Revendications

1. Machine à récolter les fourrages, comportant un dispositif de broyage (32, 34) pouvant être entraîné en rotation autour d'un axe et deux rouleaux de compression (42) disposés en aval du dispositif de broyage qui coopèrent, peuvent être entraînés en rotation autour d'axes de rotation parallèles entre eux et à l'axe de rotation du dispositif de broyage et forment entre eux une fente d'entrée, les produits de récolte broyés par le dispositif de broyage passant par la fente d'entrée des rouleaux de compression et étant amenés à un dispositif de décharge, caractérisé en ce que les rouleaux de compression (42) sont disposés, dans la direction de passage des produits de récolte, après le dispositif de broyage (32, 34) de telle façon que la fente d'entrée se trouve sur la trajectoire des produits de récolte broyés projetés tangentiellement du dispositif de broyage.

2. Unité modulaire pour une machine à récolter les fourrages, comportant un dispositif de broyage (32, 34) pouvant être entraîné en rotation autour d'un axe et deux rouleaux de compression (42) disposés en aval du dispositif de broyage qui coopèrent, peuvent être entraînés en rotation autour d'axes de rotation parallèles entre eux et à l'axe de rotation du dispositif de broyage et forment entre eux une fente d'entrée, les produits de récolte broyés par le dispositif de broyage passant par la fente d'entrée des rouleaux de compression et étant amenés à un dispositif de décharge, caractérisée en ce que les rouleaux de compression (42) sont groupés avec un dispositif de transport (44) des produits de récolte broyés monté en aval dans l'unité modulaire pouvant être incorporée de façon facilement amovible dans la machine à récolter les fourrages, qui est constituée et peut être montée de telle façon que les rouleaux de compression (42) se trouvent, dans la direction de passage des produits de récolte, après le dispositif de broyage (32, 34), de telle façon que leur fente d'entrée se trouve sur la trajectoire des produits de récolte broyés projetés tangentiellement du dispositif de broyage.

3. Machine à récolter les fourrages suivant la revendication 1 ou 2, caractérisée en ce que le dispositif de broyage (32, 34) comprend un rotor à couteaux ou tambour de coupe rotatif (32), et en ce que la vitesse périphérique d'un rouleau de compression (42) correspond sensiblement à la vitesse périphérique du tambour de coupe (32).

4. Machine à récolter les fourrages suivant la revendication 3, caractérisée en ce que l'un des rouleaux de compression (42) peut être entraîné à partir du tambour de coupe (32).

5. Machine à récolter les fourrages suivant la revendication 3 ou 4, caractérisée en ce que la liaison cinématique des deux rouleaux de compression (42) est réalisée de façon que l'un des deux rouleaux de compression (42) puisse être entraîné plus vite que l'autre et que la vitesse périphérique du rouleau de compression (42) entraîne le plus lentement corresponde sensiblement à la vitesse périphérique du tambour de coupe (32).

6. Machine à récolter les fourrages suivant la revendication 5, caractérisée en ce que le rouleau de compression inférieur (42) est le rouleau qui est entraîné à la plus grande vitesse.

7. Machine à récolter les fourrages suivant une ou plusieurs des revendications précédentes, caractérisée en ce que le diamètre des rouleaux de compression (42) est d'environ un tiers du diamètre du tambour de coupe (32).

8. Machine à récolter les fourrages suivant la revendication 1 ou 2, caractérisée en ce que le rouleau de compression (42) supérieur est, dans la direction de passage des produits de récolte, décalé en aval par rapport au rouleau de compression (42) inférieur.

9. Machine à récolter les fourrages suivant la revendication 1 ou 2, caractérisée en ce que les rouleaux de compression (42) sont placés au-dessous du plan horizontal contenant l'axe du dispositif de broyage (32, 34), et en ce que l'axe de rotation du rouleau de compression (42) situé le plus bas est prévu au-dessous de la périphérie du dispositif de broyage (32, 34).

10. Machine à récolter les fourrages suivant une ou plusieurs des revendications précédentes, caractérisée en ce qu'après les rouleaux de compression (42), un dispositif de transport, par exemple un transporteur à hélice (44), amenant les produits de récolte au dispositif de décharge, est disposé de façon que la section d'entrée du dispositif de transport se trouve sur la trajectoire de lancement des produits de récolte projetés des rouleaux de compression (42).

11. Machine à récolter les fourrages suivant la revendication 10, caractérisée en ce que le dispositif de transport (44) dépasse par son extrémité située en amont au-dessous du rouleau de compression (42) supérieur et est guidé jusqu'au voisinage immédiat du rouleau de compression (42) inférieur.

12. Machine à récolter les fourrages suivant une ou plusieurs des revendications précédentes, caractérisée en ce que le rouleau de compression (42) inférieur est monté avec une suspension flexible.

*FIG. I*

*FIG. 2*

0 058 431

FIG. 3

FIG. 4

FIG. 5

11